(19) Europäisches Patentamt
European Patent Office
Office européen des brevets

(11) **EP 3 254 291 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **16702136.9**

(22) Anmeldetag: **01.02.2016**

(51) Internationale Patentklassifikation (IPC):
**H01B 3/30** (2006.01)  **B05D 1/06** (2006.01)
**H02K 1/12** (2006.01)  **C09D 5/03** (2006.01)

(52) Gemeinsame Patentklassifikation (CPC):
**H01B 3/306; C09D 5/031; H02K 15/10;** B05D 1/06;
B05D 3/0254; B05D 7/14; B05D 2202/45

(86) Internationale Anmeldenummer:
**PCT/EP2016/052036**

(87) Internationale Veröffentlichungsnummer:
**WO 2016/124523 (11.08.2016 Gazette 2016/32)**

(54) **VERFAHREN ZUM AUFBRINGEN EINER ISOLIERENDEN SCHICHT UND ELEKTRONISCHES BAUTEIL**

METHOD FOR APPLYING AN INSULATING LAYER AND ELECTRONIC COMPONENT

PROCÉDÉ D'APPLICATION D'UNE COUCHE ISOLANTE ET COMPOSANT ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2015 DE 102015201755**
**29.10.2015 DE 102015221150**

(43) Veröffentlichungstag der Anmeldung:
**13.12.2017 Patentblatt 2017/50**

(73) Patentinhaber: **Volkswagen AG**
**38440 Wolfsburg (DE)**

(72) Erfinder:
• **BEHRENDT, Reiner Nico**
**38444 Wolfsburg (DE)**
• **MENZEL, Marcus**
**38527 Meine (DE)**
• **BUDDE, Thomas**
**30169 Hannover (DE)**
• **SHAGHAGHI, Arash**
**34253 Lohfelden (DE)**

(74) Vertreter: **Gulde & Partner**
**Patent- und Rechtsanwaltskanzlei mbB**
**Berliner Freiheit 2**
**10785 Berlin (DE)**

(56) Entgegenhaltungen:
EP-A1- 3 081 608          WO-A2-01/48763
DE-A1- 102006 061 940    DE-A1- 102013 004 659
US-A- 4 199 651

• ALAN RAWLE: "BASIC PRINCIPLES OF PARTICLE SIZE ANALYSIS", MALVERN TECHNICAL PAPER, no. MRK034, 1 January 1993 (1993-01-01), UK, pages 1 - 8, XP055009141, Retrieved from the Internet <URL:http://www.rci.rutgers.edu/~moghe/PSD Basics.pdf>

**Beschreibung**

Die Erfindung betrifft Verfahren zum Auftragen einer elektrisch isolierenden Schicht auf eine metallische Oberfläche, sowie ein elektrisches Bauteil mit einer solchen.

Elektrische Maschinen (elektromechanische Wandler), beispielsweise elektrische Antriebsmotoren für Kraftfahrzeuge, Starter, Generatoren oder Starter-Generatoren, wandeln elektrische Energie in mechanische Energie (Motoren) beziehungsweise mechanische Energie in elektrische Energie (Generatoren) um. Diese elektromechanische Umwandlung beruht auf elektromagnetischer Induktion. Derartige elektrische Maschinen umfassen einen feststehenden Stator (auch Ständer oder Primärteil genannt), der nach einer häufigen Bauart einen Statorkern (Blechpaket) mit einer Vielzahl von mit entsprechenden Drahtwicklungen umwickelten Statorpolen umfasst. Elektrische Maschinen umfassen eine bewegliche Komponente (auch Läufer oder Sekundärteil genannt), die bei dem häufigsten Bautyp als Rotor ausgebildet ist, welcher drehbar in dem oder um den ringförmig ausgebildeten Stator gelagert ist und eine Vielzahl an Permanentmagneten aufweist. Dabei wird aufgrund des bewegten Magnetfeldes des Rotors ein Stromfluss in der Statorwicklung erzeugt (Generator) beziehungsweise aufgrund des durch den Stator erzeugten Magnetfeldes die mechanische Bewegung/Rotation des Rotors bewirkt (Motor). Umgekehrte Bautypen, bei denen der Rotor eine Wicklung und der Stator Magnete umfasst, sind ebenfalls bekannt.

Die einzelnen Wicklungen des Stators oder Rotors sind miteinander und nach außen durch einen Schaltring (auch als Verschaltungsring oder Kontaktbrücke bezeichnet) elektrisch verschaltet. Der Schaltring ist üblicherweise auf dem Wickelkopf angeordnet und weist mehrere Schaltringelemente auf. So umfasst bei 3-Phasen-Wechselstrom-Maschinen der Schaltring üblicherweise drei Schaltringelemente, die jeweils jede dritte Teilwicklung (Spule) elektrisch miteinander verschalten. So beschreibt EP 1 505 711 A2 (DE 10 2004 036 368 A1) eine Schaltringanordnung für einen Stator eines dreiphasigen Drehstrommotors, die aus drei übereinander liegenden Schaltringelementen in Form von Kupferschienen, von denen jeder jede dritte Wicklung des Stators miteinander verschaltet, sowie aus einem Sternpunktring besteht. Zwischen den einzelnen Schaltringelementen und dem Sternpunktring ist jeweils ein Isolierring aus einem elektrisch isolierenden Material angeordnet. Auch DE 10 2008 007 409 A1 beschreibt eine dreiteilige Schaltringanordnung für einen Stator, wobei drei Schaltringelemente sowie ein Sternpunktring in einer Ebene flächig nebeneinander liegend in einem Trägerring aus einem temperaturbeständigen Kunststoff, wie Polyphenylensulfid, eingeschlossen sind. Kontaktstellen der Schaltringelemente sowie des Sternpunktrings ragen aus dem Trägerring heraus und sind mit den Drahtenden der Teilwicklungen des Stators verbunden. Die in DE 102011 115 405 A1 beschriebene Schaltringanordnung weist drei im Wesentlichen koaxial angeordnete Schaltringelemente auf, die in einem Kunststoff eingebettet und somit voneinander isoliert sind. Die Herstellung erfolgt durch Spritzguss. Die Schaltringanordnungen der DE 10 2008 007 409 A1 und DE 10 2011 115 405 A1 sind somit als kompakte Bauteile ausgeführt, in denen die einzelnen Schaltringe in massiven Kunststoffkörpern eingebettet sind.

An das elektrisch isolierende Material elektrischer Bauteile, beispielsweise zwischen den Schaltringelementen, werden hohe Anforderungen gestellt. Es muss in erster Linie ein hohes elektrisches Isolationsvermögen und insbesondere eine hohe Durchschlagfestigkeit und Teilentladungsfestigkeit aufweisen. Darüber hinaus muss es über eine hohe Beständigkeit insbesondere gegenüber Temperaturschwankungen und -spitzen verfügen. Diese Eigenschaften sollten ferner bereits bei niedrigen Schichtdicken von weniger als 500 μm erreicht werden, um den Platzbedarf des elektrischen Bauteils möglichst gering zu halten.

Bekannt ist, die einzelnen Kupferschienen vor dem Verbau mit einer elektrisch isolierenden Kunststoffschicht durch Pulverbeschichtung zu versehen. Als Materialien werden insbesondere Epoxidharze verwendet. Hierzu beschreibt DE 30 109 82 A1 eine typische Beschichtungsmasse, bestehend aus einem Epoxidharz, Kautschukanteilen und anorganischen Füllstoffen. Epoxidharze haben jedoch den Nachteil, dass sie zur Ausbildung von Fehlstellen neigen, welche wiederum zu elektrischen Durchschlägen führen können.

Das Verfahren der Pulverbeschichtung ist gegenüber Extrusions-, Spritzguss- und Elektrodepositionsverfahren grundsätzlich weniger aufwendig, kann jedoch in Bezug auf die Oberflächenqualität (homogene Schichtdicke) zu Problemen führen, was gerade für elektrische Isolationsanwendungen nachteilig ist.

Ebenfalls bekannt ist die Verwendung von Hochtemperaturpolymeren wie Polyetheretherketon (PEEK) und Polyphenylensulfid (PPS), welche gemäß den Druckschriften DE 10 2006 061 940 A1, DE10 2005 009 552 A1 und WO 00 2006 0921 26 A1 mittels Pulverbeschichtungen auf einer Oberfläche aufgetragen werden.

WO 01/48763 A2 offenbart ein Verfahren zum Auftragen einer elektrisch isolierenden Schicht auf einen elektrischen Leiter, wobei zunächst ein pulverförmiges Epoxidharz aufgetragen und dann das aufgetragene Epoxidharz thermisch gehärtet wird.

Aus DE 10 2009 047 865 A1 ist bekannt, dass bei Auftragen von Kunststoffpartikeln von Polyetherketonen eine Partikelgröße von 10 μm unterschritten werden sollte, um möglichst dünne Schichten zu erzielen.

DE 10 2006 061940 A1 beschreibt ein Verfahren zur Herstellung einer elektrisch isolierenden Schicht auf einer metallischen Oberfläche, beispielsweise von Drähten, wobei eine Pulverschicht, umfassend ein thermoplastisches Hochtemperaturpolymer und ein Metalloxidpulver als Füllstoff, auf die Oberfläche aufgebracht und anschließend eingebrannt wird. Es werden Schichtdicken im Bereich von 5 bis maximal 150 $\mu$m erzeugt, wobei die mittlere Partikelgröße des pulverförmigen Hochtemperaturpolymers maximal dem Zweifachen der zu erzeugenden Schichtdicke beträgt.

US 4 199 651 A beschreibt ein Verfahren zum Erzeugen einer elektrisch isolierenden Schicht auf einer metallischen Oberfläche, beispielsweise von Drähten, wobei ein Blend von Polyetheramidimid und einem phenolischen Polymer elektrostatisch auf der Oberfläche abgeschieden und anschließend gesintert wird. Der mittlere Partikeldurchmesser des Polymerblends liegt im Bereich von 5 bis 200 $\mu$m.

EP 3 081 608 A1 beschreibt ein Verfahren zum statischen Pulverspritzen eines Epoxidharz-Blends auf eine Metalloberfläche.

Zur Vermeidung von Wirbelströmen ist es bekannt, den Statorkern nicht aus massivem Metall auszuführen, sondern als Statorblechpaket. Zur elektrischen Isolation der einzelnen Bleche in der Fläche werden diese dann voneinander mit isolierenden Lacken, beispielsweise C5-Lacken, versehen. Weiterhin werden die für den Stator notwendigen Kupferdrahtwicklungen um die einzelnen Zähne des Statorblechpaketes herumgewickelt, sodass die Wicklungen in den Nuten angeordnet sind. Die Kupferdrahtwicklungen müssen jedoch zuverlässig vom Statorblechpaket elektrisch isoliert werden. Um dies zu gewährleisten, werden sogenannte Isolationspapiere beziehungsweise Flächenisolationswerkstoffe (zum Beispiel bestehend aus Kapton® und/oder Nomex®) zwischen dem Statorblechpaket und den Kupferdrahtwicklungen angeordnet.

Gerade das aus Polyimid bestehende Kapton® hat jedoch den Nachteil, dass es lediglich als Folie, Bandage oder als andere einfache Halbzeuge verfügbar ist, da es nicht ohne Zersetzung schmelzbar ist. Polyimid ist daher zum Beispiel für Pulverbeschichtungsprozesse nicht geeignet.

Der Erfindung liegt nun die Aufgabe zugrunde, die Isolationswirkung, die elektrische Durchschlagfestigkeit, die Teilentladungsfestigkeit und die thermische Beständigkeit der isolierenden Schicht weiter zu verbessern und insbesondere ein günstiges Verfahren zur Herstellung einer qualitativ sehr hochwertigen isolierenden Schicht anzugeben.

Diese Aufgabe wird durch ein Verfahren sowie ein elektrisches Bauteil mit den Merkmalen der unabhängigen Ansprüche gelöst.

Somit betrifft ein erster Aspekt der Erfindung ein Verfahren zum Auftragen einer elektrisch isolierenden Schicht auf eine metallische Oberfläche, wobei in einem ersten Schritt ein pulverförmiges Hochtemperaturpolymer mit einem mittleren Partikeldurchmesser [D(v; 0,5)] im Bereich von 20 bis 100 $\mu$m auf die metallische Oberfläche aufgetragen wird und in einem zweiten Schritt auf das aufgetragene Hochtemperaturpolymer Wärme einwirkt, wobei die metallische Oberfläche geerdet ist, sodass elektrische Ladungen abfließen. Dabei ist das pulverförmige Hochtemperaturpolymer ein Polyetherimid und das Polymerpulver weist einen kleinsten Partikeldurchmesser von 5-10 $\mu$m [D(v; 0,1)] und einen größten Partikeldurchmesser von 50-80 $\mu$m [D(v; 0,9)] auf.

Es zeigt sich, dass der Partikeldurchmesser der bei der Pulverbeschichtung verwendeten Pulverpartikel für die Homogenität und die Haftung der resultierenden Schicht einen entscheidenden Einfluss hat. Im Rahmen der Erfindung wurde gefunden, dass es bei zu kleinen Partikeln durch deren geringe Masse zu Rücksprüheffekten kommt, die insbesondere bei Materialien mit sehr hoher elektrischer Isolationswirkung zum Tragen kommen. Es wurde beobachtet, dass mit zunehmender Beschichtungsdauer beziehungsweise Beschichtungsstärke die Rücksprüheffekte zunehmen. Ursache ist, dass die Polymerpartikel elektrisch aufgeladen sind und von bereits auf der metallischen Oberfläche niedergeschlagenen und gleichartig geladenen Polymerpartikeln abgestoßen werden. Durch die gute elektrische Isolation der Partikel behalten die abgeschiedenen Partikel ihre Ladung bei und stoßen neu hinzukommende, insbesondere kleine Partikel mit gleicher Ladung ab. In Abhängigkeit von der Partikelgröße und dem Material beziehungsweise der Speicherwirkung für elektrische Ladungen des Materials führen diese Rücksprüheffekte zu geringen Maximaldicken der isolierenden Schicht. Ferner ist die Abscheidung durch diese Effekte sehr unregelmäßig und führt zu einer erhöhten Anzahl von Stellen auf dem Werkstück, an denen sich kaum Material niederschlägt. Zu große Partikel hingegen werden aufgrund ihrer Masse zwar effektiv auf der Oberfläche niedergeschlagen, zeigen jedoch wiederum eine schlechtere Oberflächen-Haftung. Weiterhin werden bei zu großen Partikeln Inhomogenitäten in der aufgetragenen Schicht in Form von sogenannter Orangenhaut gefunden, da die größeren Partikel schlechter zusammenfließen.

Erfindungsgemäß wurde erkannt, dass es eine optimale Partikelgröße des Polymerpulvers gibt, bei der weder relevante Rücksprüheffekte, noch Inhomogenitäten durch schlechtes interpartikuläres Zusammenfließen und/oder schlechte Substrathaftung zu beobachten sind.

Es wurde weiterhin erkannt, dass nach dem Erreichen einer gewissen Schichtdicke, vorzugsweise der halben finalen Endschichtdicke, ein Temperschritt mit elektrischer Erdung des Werkstücks bei einer Temperatur oberhalb der Glastemperatur deutlich verbessert. Der Temperschritt dient vor allem dem Abfließen von elektrischen Ladungen, aber auch der Vergleichmäßigung des Beschichtungsmaterials (homogenere Schichtdicke) und dem Abbau von möglichen mechanischen Spannungen. Nach dem Temperschritt erfolgt erneut eine Pulverbeschichtung unter den gleichen Parametern wie bei der ersten Pulverbeschichtung, um die finale Endschichtdicke der Polymerschicht zu erzielen.

Durch die verbesserte Homogenität wiederum sowie durch die Materialauswahl, führt das erfindungsgemäße Verfahren zu elektrisch isolierenden Schichten mit deutlich verbesserter Isolationswirkung. Die erzeugten Schichten sind zudem vorzugsweise transparent und porenfrei. Ferner sind bei dem erfindungsgemäßen Verfahren keine Vorbehandlung der metallischen Oberfläche und kein Vorheizen des Werkstücks notwendig, wie es bei den Verfahren des Standes der Technik insbesondere dann der Fall ist, wenn Kupfer und Stahl als metallische Oberfläche dient.

Als metallische Oberflächen werden vorliegend Oberflächen verstanden, welche metallische elektrische Eigenschaften, also eine sehr gute elektrische Leitfähigkeit bei möglichst geringen elektrischen Widerständen, sowie eine hohe Beständigkeit aufweisen. Vorzugsweise wird das erfindungsgemäße Verfahren auf Kupfer beziehungsweise Kupferverbindungen und Stahl umfassende Oberflächen angewandt.

Auf die metallische Oberfläche wird im ersten Schritt des erfindungsgemäßen Verfahrens das Hochtemperaturpolymer mittels einer Pulverquelle, beispielsweise mittels einer Sprühpistole, Sprühlanze oder ähnlichem, auf die metallische Oberfläche aufgetragen. Dabei ist es nicht erforderlich, die metallische Oberfläche vorzubehandeln, beispielsweise zu beizen oder vorzuheizen. Vorteilhafter Weise kommt es zwischen der Pulverquelle und der metallischen Oberfläche zu einer Relativbewegung, um zu gewährleisten, dass eine möglichst gleichmäßige Auftragung des Pulvers stattfindet. Nach dem Erreichen einer definierten Schichtdicke, vorzugsweise der halben finalen Schichtdicke, wird die mit dem Pulver beschichtete metallische Oberfläche einer Erwärmung in Form eines Temperschritts mit elektrischer Erdung oberhalb der Glastemperatur (bei amorphen Polymeren) ausgesetzt. Die Wärmeeinwirkung findet vorzugsweise nicht punktuell sondern großflächig statt, um elektrische Ladungen abfließen zu lassen, die Polymerschicht zu vergleichmäßigen und mechanische Materialspannungen abzubauen. Als Wärmequelle dient neben einem Temperierofen beispielsweise die Rest- oder Abwärme anderer, insbesondere vor- oder nachgeschalteter, Prozesse und/oder induktives Heizen. Induktives Heizen ist ein Verfahren, elektrisch leitfähige Körper durch in ihnen erzeugte Wirbelstromverluste zu heizen. Die Wärme entsteht unmittelbar im Körper selbst, muss also nicht durch Wärmeleitung übertragen werden. Die Wärmeleistung ist gut steuerbar. Die elektrische Leistung stammt aus speziellen Frequenzumrichtern (siehe Inverter oder auch Resonanzwandler) oder direkt aus dem Netz.

Induktive Erwärmung kann durch nichtleitende Materialien hindurch erfolgen, die Umgebung wird nur indirekt erwärmt. Das Verfahren kann unter beliebigen Gasen oder im Vakuum angewendet werden, es entstehen keine Verunreinigungen durch eine externe Wärmequelle.

Als Hochtemperaturpolymere sind Polymere zu verstehen, welche hohe Dauereinsatztemperaturen oberhalb von 180 °C aufweisen. Erfindungsgemäß ist das Hochtemperaturpolymer Polyetherimid. Vorteilhafter Weise werden bei der Verwendung von Polyetherimid (PEI) eventuelle Inhomogenitäten der Schicht, insbesondere deren Oberfläche, sehr leicht detektierbar, da insbesondere Polyetherimid eine transparente bernsteinfarbene Schicht erzeugt, welche Inhomogenitäten mit bloßem Auge erkennen lässt. Dies bietet den Vorteil einer zuverlässigen Qualitätssicherung. Zudem zeigen Polyetherimide eine sehr gute elektrische Isolationswirkung, elektrische Durchschlagfestigkeit und Teilentladungsfestigkeit, insbesondere auch bei relativ dünnen Schichten.

Mit besonderem Vorteil wird das Polyetherimid Poly-[2,2'-bis(4-(3,4-dicarboxyphenoxy)-phenylpropan)-1,3-phenylen-bisimid] für das erfindungsgemäße Verfahren verwendet. Der Grund hierfür liegt darin, dass es sich um ein amorphes Material handelt. Aus diesem Grund zeigt das Polyetherimid nur einen sehr geringen Schrumpf. Es wurde erkannt, dass dieser Zusammenhang auch ursächlich für die gute Haftung auf Metalloberflächen ist.

In einer weiter bevorzugten Ausgestaltung der Erfindung ist vorgesehen, dass die Partikel des pulverförmigen Hochtemperaturpolymers einen mittleren Durchmesser [(D(v; 0,5)] im Bereich von 20 bis 50 $\mu$m, aufweisen. Zusätzlich beträgt erfindungsgemäß die Partikelgröße der kleinsten Partikel [D(v; 0,1)] 5 bis 10 $\mu$m und eine Partikelgröße der größten Partikel [D(v; 0,9)] 50 bis 80 $\mu$m.

Untersuchungen ergaben, dass Partikelgrößenverteilungen in diesen Bereichen die Homogenität der Schicht bei Erhöhung der Maximalschichtdicke weiter verbessern, da die Rücksprüheffekte reduziert werden und gleichzeitig eine sehr gute Haftung der Schicht auf der metallischen Oberfläche erzielt wird.

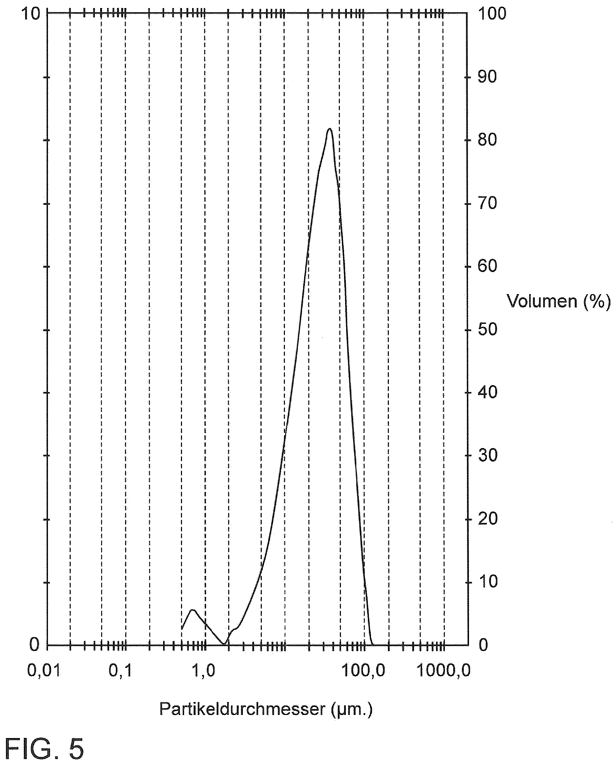

Eine möglichst enge Verteilung der Partikeldurchmesser, insbesondere eine solche wie in Figur 5 gezeigt, wirkt sich positiv auf die Haftung der Schicht auf der metallischen Oberfläche aus. Weiter konnte gezeigt werden, dass durch diese Partikelgrößenverteilung eine in Bezug auf die Homogenität, Materialausbeute und Haftung optimierte elektrisch isolierende Schicht erzeugt wird.

In besonderer Ausgestaltung der Erfindung ist ferner vorgesehen, dass die Wärme in einem Temperschritt im Bereich von 200 bis 400 °C, insbesondere im Bereich von 250 bis 350 °C, auf das aufgetragene Hochtemperaturpolymer einwirkt. Der Temperschritt mit elektrischer Erdung des Werkstücks erfolgt bei einer Temperatur oberhalb der Glastemperatur des Hochtemperaturpolymers. Der Temperschritt dient vor allem dem Abfließen von elektrischen Ladungen, aber auch der Vergleichmäßigung des Beschichtungsmaterials (homogenere Schichtdicke) und dem Abbau von möglichen mechanischen Spannungen. Nach dem Temperschritt erfolgt vorzugsweise erneut eine Pulverbeschichtung unter den gleichen Parametern wie bei der ersten Pulverbeschichtung, um die finale Schichtdicke der Polymerschicht zu erzielen.

Durch die eingebrachte Wärme, insbesondere bei induktiver Heizung, verschmelzen die Hochtemperaturpolymer-Partikel zu einer durchgängigen Schicht, die gute Hafteigenschaften auf metallischen Oberflächen, insbesondere Stahl- und Kupferoberflächen, zeigt.

Die bevorzugten Temperaturbereiche liegen vorteilhafter Weise deutlich oberhalb der Glastemperatur des bevorzugt amorphen Hochtemperaturpolymers. In den angegebenen Bereichen findet ein Erweichen des Polymers statt, sodass die Partikel eine Verbindung untereinander eingehen können und das erweichte Polymer die oberflächlichen Hohlräume des Beschichtungssubstrates füllen kann, sowie eine bestmögliche Benetzung der metallischen Oberfläche und eine weitestgehend porenfreie Schicht erzeugt werden. Zudem führt der Temperschritt zu einem Abfließen von Ladungen aus der polymeren Schicht, da diese infolge des Abscheidens geladener Partikel und/oder polarisierter Partikel elektrisch oder elektrostatisch geladen ist. Bei der Verwendung von Polyetherimid zeigte sich ein Temperschritt bei Temperaturen im Bereich von 300 bis 325 °C, insbesondere 310 °C, für eine Dauer von 10 bis 20 Minuten, insbesondere von zirka 15 Minuten, als besonders günstig zur Erzielung optimaler Schichteigenschaften.

Weiterhin ist bevorzugt, dass die isolierende Schicht eine Schichtdicke im Bereich von 10 bis 300 $\mu$m, vorzugsweise im Bereich von 80 bis 200 $\mu$m aufweist, insbesondere bevorzugt sind Schichtdicken im Bereich von 90 bis 130 $\mu$m. Insbesondere sind Schichtdicken im Bereich von 80 bis 200 $\mu$m für die elektrisch isolierende Beschichtung von Teilen elektrischer Maschinen, zum Beispiel von Schaltringen oder Blechpaketen, bevorzugt. Für die Beschichtung von Schweißverbindungen, insbesondere an Drähten, insbesondere in elektrischen Maschinen, sind hingegen Schichtdicken im Bereich von 10 bis 100 $\mu$m bevorzugt. Bei der Verwendung von Polyetherimid nach dem erfindungsgemäßen Verfahren ist eine sehr gute elektrische Isolation in Form von hoher elektrischer Durchschlagfestigkeit und Teilentladungsfestigkeit schon bei sehr geringen Schichtdicken erzielbar.

Mit besonderem Vorteil werden der erste und/oder der zweite Schritt des erfindungsgemäßen Verfahrens wiederholt. Eine zumindest einmalige Wiederholung dient in erster Linie dazu, unter Umständen noch vorhandene Bereiche geringer Materialdicke (Täler) aufzufüllen. Somit erhöhen der Wiederholungsschritt beziehungsweise die Wiederholungsschritte insbesondere die Oberflächenhomogenität und führen zu einheitlichen Schichtdicken über das gesamte Substrat. Da die Schichtdicke der isolierenden Schicht, insbesondere in den bevorzugten Bereichen, sich proportional zum elektrischen Isolationsvermögen (elektrische Durchschlagfestigkeit und Teilentladungsfestigkeit) verhält, wird zudem die Qualität der isolierenden Schicht durch den Wiederholungsvorgang deutlich verbessert.

Dabei ist bevorzugt, dass das im ersten und/oder im zweiten Schritt vor dem ersten Tempern mit elektrischer Erdung aufgetragene Hochtemperaturpolymer eine Schichtdicke im Bereich von 30 bis 70 $\mu$m, insbesondere im Bereich von 45 bis 55 $\mu$m, aufweist, insbesondere wenn eine finale Schichtdicke von 100 $\mu$m erzeugt werden soll. Dies führt vorteilhafter Weise dazu, dass die Gesamtschichtdicke auch bei Wiederholung der einzelnen Schritte nicht über die bevorzugten Grenzen hinaus erhöht wird. Zudem wird in dieser Ausgestaltung eine maximale Homogenität der isolierenden Schicht durch den Mehrschichtaufbau erzielt. Vorzugsweise wird nach dem Abscheiden der ersten Schicht bei einer Schichtdicke von 30 bis 70 $\mu$m ein Temperschritt mit elektrischer Erdung angeschlossen. Der Temperschritt dient vor allem dem Abfließen von elektrischen Ladungen, aber auch der Vergleichmäßigung des Beschichtungsmaterials (homogenere Schichtdicke) und dem Abbau von möglichen mechanischen Spannungen. Insbesondere in den Bereichen der Schicht, bei denen Rücksprüheffekte infolge geladener Partikel auf der Oberfläche zu einem Stagnieren des Schichtwachstums führen, führt die Entladung durch den Temperschritt dazu, dass auch oder gerade in Bereichen, in denen im ersten Schritt kein oder nur ein gehemmtes Schichtwachstum mehr möglich war, in einem zweiten Abscheidevorgang über das gesamte Substrat eine homogene Gesamtschichtdicke erzielt wird.

Mit besonderem Vorteil wird das erfindungsgemäße Verfahren, insbesondere der Temperschritt, unter Schutzgasatmosphäre durchgeführt. Bei diesem Verfahren ist eine Schutzgasatmosphäre jedoch nicht zwingend notwendig.

Zudem ist bevorzugt, dass die metallische Oberfläche auch eine Schweißverbindung umfasst und das Verfahren insbesondere unmittelbar nach dem Schweißen durchgeführt wird, um durch die erfindungsgemäße Pulverbeschichtung eine effektive elektrische Isolation, insbesondere innerhalb einer durch den Schweißvorgang entstehenden Wärmeeinflusszone, zu erzielen. Beide Ausführungsformen dienen dazu, dass Metall in der Wärmeeinflusszone der Schweißverbindung elektrisch zu isolieren und gleichzeitig eine Korrosion des Metalls zu vermeiden.

Ein weiterer Aspekt der Erfindung betrifft ein elektrisches Bauteil, aufweisend ein Statorblechpaket umfassend zwei metallische Oberflächen, die einander zugewandt angeordnet sind, wobei zur elektrischen Isolation auf den metallischen Oberflächen eine isolierende Schicht angeordnet ist, die mit dem Verfahren gemäß einem der vorhergehenden Ansprüche aufgebracht oder aufbringbar ist.

Mit besonderem Vorteil ist das elektrische Bauteil ein Bauteil einer elektrischen Maschine, insbesondere ein Schaltring für eine elektrische Maschine, ein Statorblechpaket, wobei die Beschichtung vorzugsweise als Nutinnenbeschichtung ausgeführt ist oder als Beschichtung zur elektrischen Isolation von Wärmeeinflusszonen von Schweißverbindungen, zum Beispiel von verschweißten Drahtwicklungen, dient.

In besonders bevorzugter Ausgestaltung der Erfindung weist die metallische Oberfläche zweier durch einen Schweißprozess zu verbindender Werkstücke zwei aneinander angrenzende Abschnitte auf, wobei ein erster Abschnitt nach dem erfindungsgemäßen Verfahren beschichtet ist und ein zweiter Abschnitt eine mit Polyetherimid-Partikeln angereicherte umfassende Schicht aufweist. Diese Schicht ist beispielsweise ein Lack (Drahtlack) oder eine andere Schutzschicht, welche die grundsätzlich guten Haftungseigenschaften der erfindungsgemäß aufgetragenen Beschichtung unter Umständen herabsetzen könnte beziehungsweise durch die sich eine Grenzfläche zwischen zwei Beschichtungen ergeben würde, die zu Fehlern in der elektrischen und/oder Feuchte-Isolation führen. Besonders bevorzugt ist diese Ausgestaltung bei der erfindungsgemäßen Beschichtung von Bauteilen, welche eine Schweißverbindung mit Wärmeeinflusszone aufweisen, da im Zuge eines Schweißprozesses die Schicht zumindest im Bereich der Wärmeeinflusszone beschädigt oder entfernt wird. Das Vorhandensein von Polyetherimid im Bereich der Schicht fördert eine Verbindung der Schicht mit der erfindungsgemäßen Beschichtung und verbessert somit den Übergang zwischen Lackschicht und Pulverbeschichtung. Zudem wird das Auftreten von Fehlstellen reduziert. Bei den betreffenden Werkstücken handelt es sich beispielsweise um Drähte einer Wicklung einer E-Maschine, die durch Schweißen miteinander verbunden werden.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1     einen schematischen Aufbau eines Schaltrings, sowie die Anordnung darin angeordneter Kupferschienen;

Figur 2     ein Bauteil mit einer Beschichtung in einer ersten Ausgestaltung der Erfindung,

Figur 3     ein weiteres Bauteil mit Beschichtung in einer weiteren Ausgestaltung der Erfindung,

Figur 4     eine schematische Darstellung des Ablaufs des erfindungsgemäßen Verfahrens in einer bevorzugten Ausführungsform,

Figur 5     eine logarithmische Auftragung einer Partikeldurchmesserverteilung nach einer bevorzugten Ausführungsform am Beispiel eines Polyetherimid-Pulvers zur Isolationsbeschichtung, und

Figur 6     einen gemessenen Verlauf von Teilentladungs-Einsetzspannungen in einer erfindungsgemäßen Isolationsschicht bei einer Spannungsstoß-Teilentladung

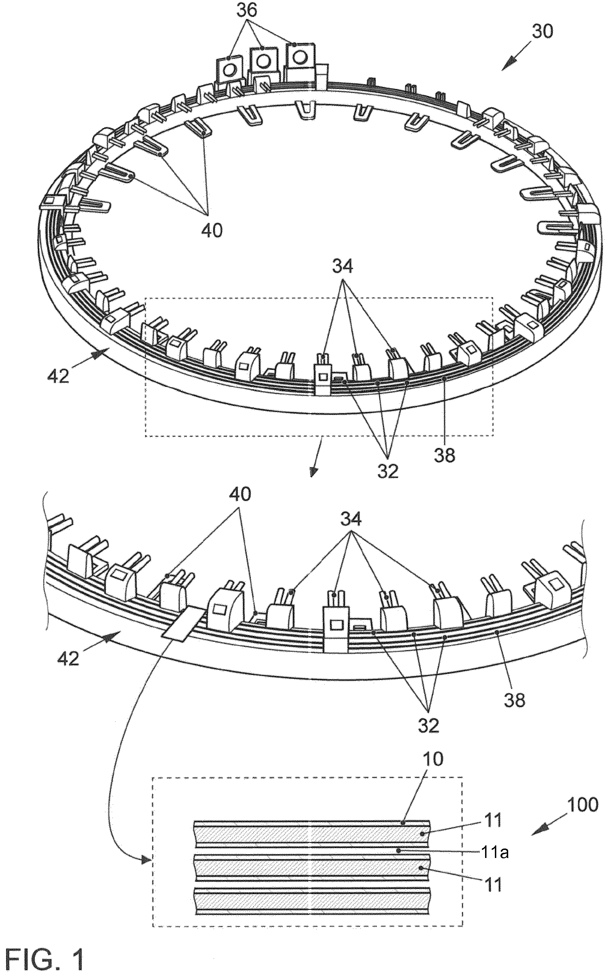

Der beispielhafte Aufbau eines Schaltrings 30 ist in Figur 1 dargestellt, wobei im unteren Teil der Figur 1 ein vergrößerter Teilausschnitt gezeigt ist.

Der hier dargestellte Schaltring 30 zur Anbindung an einen Stator (nicht dargestellt) weist drei Schaltringelemente 32 auf, die konzentrisch ineinander liegend und in der gewählten Darstellung senkrecht stehend angeordnet sind. Zwischen den einzelnen Schaltringelementen 32 ist jeweils eine isolierende Schicht 10 angeordnet, sodass die Schaltringelemente 32 elektrisch voneinander isoliert sind. Jedes Schaltringelement 32 weist eine Vielzahl von Kontaktstellen 34 auf, welche axial über die einzelnen Schaltringelemente 32 hervorstehen und radial nach innen abgewinkelt sind. Die Kontaktstellen 34 dienen der elektrischen Verschaltung der Teilwicklungen des Stators miteinander. Zu diesem Zweck werden die Kontaktstellen 34 mit Drahtenden der Teilwicklungen elektrisch leitfähig verbunden, beispielsweise stoffschlüssig durch Schweißen oder Löten. Jedes Schaltringelement 32 weist ferner eine Anschlussstelle 36 auf, welche dem externen Anschluss des Stators beispielsweise an einen Hochvoltanschluss dienen. Jedes Schaltringelement 32 zusammen mit den Kontaktstellen 34 und der Anschlussstelle 36 ist vorzugsweise jeweils einstückig aus einem Metall, beispielsweise aus Kupfer hergestellt.

Der Schaltring 30 kann wie in diesem Beispiel ferner einen Sternpunktring 38 aufweisen, der hier ebenfalls in koaxialer Anordnung mit den drei Schaltringelementen 32 als äußere Ringlage angeordnet ist. Zwischen dem Sternpunktring 38 und dem daran anschließenden Schaltringelement 32 ist ebenfalls eine isolierende Schicht 10 vorhanden. Der Sternpunktring 38 bildet den elektrischen Sternpunkt der elektrischen Verschaltung für die Teilwicklungen. Zu diesem Zweck weist der Sternpunktring 38 radial nach innen abgewinkelte Kontaktierungsfortsätze 40 auf, die sich im montierten Zustand auf den Statorpolen des Statorkerns erstrecken und von den Teilwicklungen umwickelt werden. Die Kontaktierungsfortsätze 40 dienen der Kontaktierung eines Endes der um die Pole des Stators gewickelten Teilwicklungen.

Die vorstehend beschriebene Struktur des Schaltrings 30 ist an sich bekannt. Im Rahmen der vorliegenden Erfindung können auch andere Gestaltungen Anwendung finden.

Die untere Detaildarstellung zeigt einen weiter vergrößerten Ausschnitt des Schaltrings 30 und verdeutlicht die Anordnung der isolierenden Schicht 10 zwischen den einzelnen Schaltringelementen 32 des Schaltrings 30. Diese ergeben einen Schichtstapel 100, wobei jedes Schaltringelement 32 eine metallische Oberfläche 11 darstellt, an der beidseits beziehungsweise umlaufend, aber zumindest auf der einer benachbarten metallischen Oberfläche 11 zugewandten Seite, die isolierende Schicht 10 angeordnet ist. Zwischen zwei metallischen Oberflächen 11 sind demnach zwei isolierende Schichten 10 angeordnet. Je nach Qualität und Ausgestaltung der isolierenden Schicht 10 sowie bei größeren Toleranzen der Schaltringelemente 32 können zwischen den isolierenden Schichten 11 Spalte 11a auftreten.

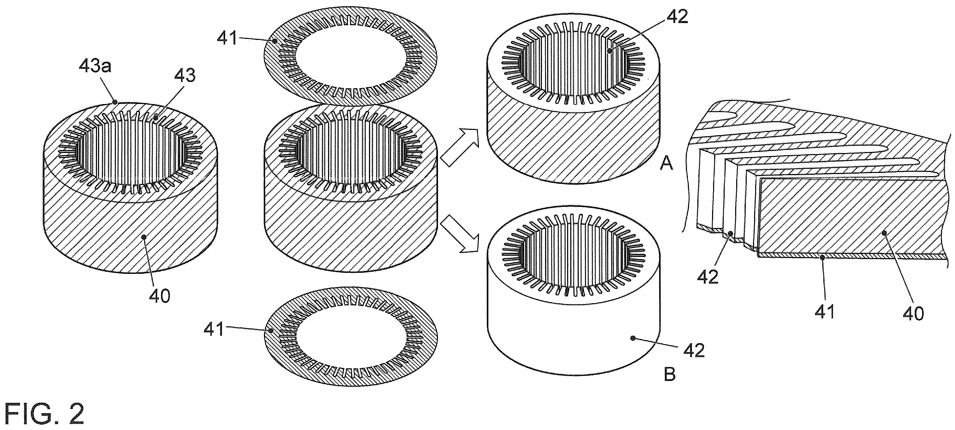

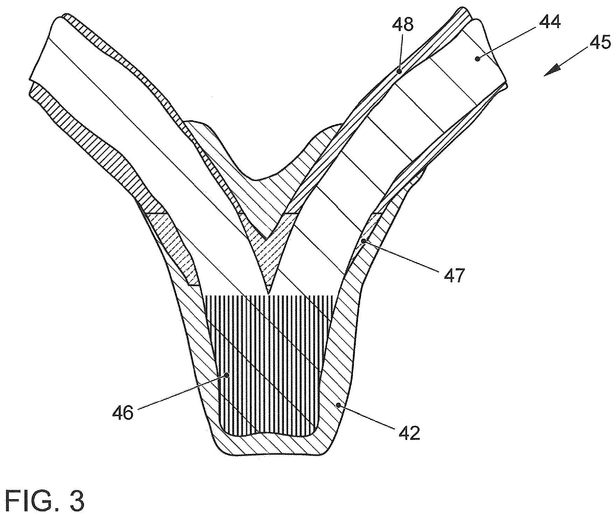

Der Schaltring 30 ist ein Beispiel eines erfindungsgemäßen Bauteils 45, welches eine isolierende Beschichtung nach dem erfindungsgemäßen Verfahren aufweist. Weitere Bauteile 45 im Sinne der Erfindung sind in den Figuren 2 und 3 gezeigt.

So zeigt Figur 2 ein Statorblechpaket 40. Dieses Statorblechpaket 40 besteht aus einer Vielzahl von Blechlamellen, die zum Beispiel durch einen Stanzpaketiervorgang zu einem Statorblechpaket 40 zusammengesetzt wurden. Es weist einen zylinderförmigen Außenmantel auf.

Die Statorblechpakete verfügen über das Joch 43a. Von diesem Joch 43a aus erstrecken sich Zähne 43 radial nach innen, wobei im radial inneren Bereich des Statorblechpaketes ein zylindrischer Bereich frei bleibt. In diesem freien zylindrischen Bereich ist beim fertiggestellten elektromotorischen Antrieb der relativ zum Stator drehbeweglich gelagerte Rotor positioniert. Zwischen den Zähnen 43 bilden sich Nuten aus, die elektrisch isoliert werden müssen. An den Öffnungen des zylindrischen Grundkörpers werden Endscheiben 41 angeordnet, die ebenfalls isolierende Funktion haben. Die elektrische Isolation der Nuten und/oder der Endscheiben kann durch das Einlegen von Isolationspapier oder bevorzugt durch eine Beschichtung mit dem erfindungsgemäßen Verfahren erfolgen. Dabei kann eine erfindungsgemäße Beschichtung 42 teilweise (A) oder vollflächig (B) auf das Statorblechpaket 40 und die Endscheiben 41 aufgebracht werden. Eine teilweise Beschichtung bietet den Vorteil, dass über den unbeschichteten Bereich ein besserer Wärmeaustausch stattfinden kann. Weiterhin kann der Kupferfüllfaktor erhöht werden, da die erfindungsgemäße Beschichtung weniger Raum als das nach dem Stand der Technik übliche Isolationspapier benötigt. Darüber hinaus ist die erfindungsgemäße Beschichtung in Bezug auf weitere Prozessschritte, wie zum Beispiel einen sich anschließenden Statorvollverguss, deutlich unkritischer, da die Beschichtung im Gegensatz zum Isolationspapier nicht "übersteht" und nicht verrutschen kann. Auch werden keine zusätzlichen Kriechstrecken, wie sie zum Beispiel durch Deckschieber entstehen, gebildet. Das Isolationspapier hat darüber hinaus den Nachteil, dass es häufig durch Handarbeit eingesetzt werden muss.

Ein weiteres Beispiel eines elektrischen Bauteils 45, welches für die erfindungsgemäße Beschichtung bevorzugt ist, zeigt Figur 3. In Figur 3 ist eine sogenannte Hair-Pin-Verbindung zweier Kupferdrähte in der Wicklung eines Stators gezeigt. Eine derartige Verbindung wird dadurch ausgebildet, dass zwei Metalldrähte 44, insbesondere Kupferdrähte mittels Schweißens miteinander verbunden werden. Die Metalldrähte 44 weisen vor dem Schweißen eine Schutzschicht 48, beispielsweise in Form eines Drahtlackes auf. Diese wird infolge des Schweißens durch die zugeführte Wärme zumindest bereichsweise, nämlich an der Schweißstelle 46 und innerhalb der sogenannten Wärmeeinflusszone (WEZ) 47 zerstört oder zumindest verändert. Daher werden die nunmehr verbundenen Metalldrähte erneut mit einer Beschichtung 42 versehen. Hierzu wird vorzugsweise das erfindungsgemäße Verfahren verwendet, wobei die Metalldrähte 44 sowohl in der Wärmeeinflusszone 47 als auch im Bereich der Schweißverbindung 46 mittels erfindungsgemäßer Pulverbeschichtung beschichtet werden.

Die metallische Oberfläche, auf der die erfindungsgemäße Beschichtung angeordnet wird, kann in zwei Abschnitte unterteilt werden. Ein erster Abschnitt 46, der im Beispiel der Figur 3 der Schweißverbindung 46 entspricht, und einem daran angrenzenden zweiten Abschnitt 47, der in der Ausgestaltung der Figur 3 der Wärmeeinflusszone entspricht. Die erfindungsgemäße Beschichtung 42 zeigt auch ohne Vorbehandlung gute Haftungseigenschaften. Weist die metallische Oberfläche im zweiten Abschnitt 47 eine weitere Schutzschicht 48 beispielsweise in Form eines Lackes auf, können die Haftungseigenschaften verbessert werden, wenn die Schutzschicht 48 Polyetherimid, insbesondere in partikulärer Form, aufweist. Durch den Wärmeeinfluss beim Schweißen und/oder dem zweiten Schritt des erfindungsgemäßen Verfahrens werden diese dann aufgeschmolzen und mit der erfindungsgemäßen Beschichtung verbunden.

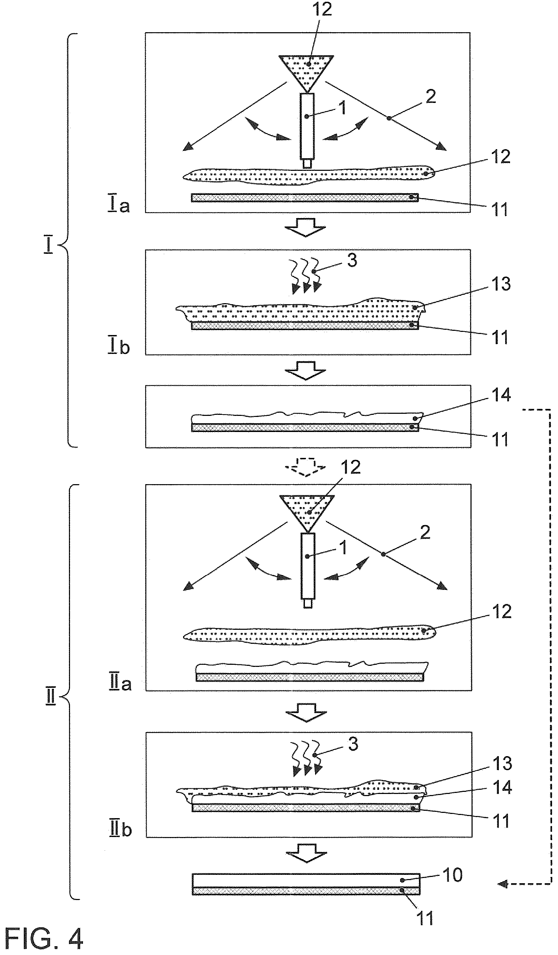

Figur 4 zeigt eine schematische Darstellung des erfindungsgemäßen Verfahrens in einer bevorzugten Ausgestaltung. In der gezeigten Ausgestaltung umfasst das Verfahren zwei Wiederholungseinheiten I und II, wobei in der ersten Einheit I in zwei Schritten la und Ib eine erste Schicht 14 auf einer metallischen Oberfläche 11 angeordnet wird. Im Wiederholungsschritt II wird auf die erste Schicht 14 durch die gleichen Verfahrensschritte IIa und IIb eine weitere Schicht aufgetragen.

Zu Beginn des erfindungsgemäßen Verfahrens werden in einem ersten Schritt la eine metallische Oberfläche 11, vorzugsweise eine Kupfer- oder Stahloberfläche, eine Oberfläche 11 aus Kupferverbindungen oder eine Stahloberfläche bereitgestellt. Die metallische Oberfläche 11 ist zuvor keiner Vorbehandlung unterzogen worden, wie beispielsweise Beizen, Temperieren oder ähnlichem. Auf diese metallische Oberfläche 11 wird mittels einer Sprühpistole 1 oder Sprühlanze ein pulverförmiges Polyetherimid mit entsprechender Partikelgrößenverteilung 12 aufgetragen. Um eine möglichst homogene Abscheidung zu erzielen, findet eine Relativbewegung zwischen metallischer Oberfläche 11 und Sprühpistole 1 statt. Dies kann entweder durch Bewegung der metallischen Oberfläche 11 oder wie gezeigt durch ein Schwenken der Sprühpistole 1 erreicht werden. Dabei ist es sinnvoll, dass der durch die Schwenkung der Sprühpistole 1 erzielbare Bearbeitungsbereich einer Breite beziehungsweise einer Länge der metallischen Oberfläche 11 entspricht.

Als Hochtemperaturpolymer wird erfindungsgemäß Polyetherimid eingesetzt. Die Partikel des pulverförmig eingesetzten Polyetherimids weisen eine Größenverteilung gemäß Fig. 3 auf. Besonders geeignet ist ein Polyetherimid mit einer Partikelgrößenverteilung von $D(v;0,1)=7\,\mu m$, $D(v;0,5)=27\,\mu m$ und $D(v;0,9)=62\,\mu m$, also ein eingesetztes Pulver mit einer Partikelgrößenverteilung gemäß Figur 5.

Nach dem Erzielen einer bestimmungsgemäßen Schichtdicke von 80 bis 200 $\mu m$, insbesondere von zirka 100

$\mu$m, vorzugsweise der halben finalen Schichtdicke wird der Pulverauftrag auf die metallische Oberfläche 11 unterbrochen. In dem sich anschließenden zweiten Schritt Ib wird das aufgetragene Hochtemperaturpolymer 13 Wärme (Tempern mit elektrischer Erdung) 3 ausgesetzt.

Dies kann beispielsweise dadurch geschehen, dass die metallische Oberfläche 11 in einem Temperofen eingebracht wird. Die Wärmequelle 3 weist eine Temperatur auf, welche sich oberhalb der Glastemperatur des Hochtemperaturpolymers, also insbesondere oberhalb von 180 °C, insbesondere oberhalb von 250 °C, befindet. Gleichzeitig ist sichergestellt, dass die Temperatur unterhalb einer für das jeweilige Hochtemperaturpolymer kritischen Temperatur liegt, bei der ein thermischer Abbau des Hochtemperaturpolymers einsetzen würde. Der Temperschritt liegt im Bereich von einigen Minuten, insbesondere im Bereich von 10 bis 20 Minuten, vorzugsweise bei zirka 15 Minuten.

Das Ergebnis ist eine metallische Oberfläche mit einer darauf angeordneten isolierenden Schicht 10. Um die Qualität dieser isolierenden Schicht 10 weiter zu verbessern, werden die Verfahrensschritte Ia und Ib in einem zweiten Wiederholungsschritt II wiederholt. Ziel ist es, eine Gesamtschichtdicke der isolierenden Schicht 10 von 80 bis 200 $\mu$m, insbesondere von 90 bis 130 $\mu$m, bevorzugt von zirka 100 $\mu$m, zu erzielen. Bei den meisten bekannten Pulverbeschichtungsverfahren mit Hochtemperaturpolymeren sind dazu mindestens drei Beschichtungsschritte erforderlich, die Wahl der Partikelgrößen beziehungsweise der Partikelgrößenverteilung ermöglicht es jedoch bei dem erfindungsgemäßen Verfahren, eine derartige Schichtdicke bereits nach zwei Beschichtungsschritten, unterbrochen von einem Temperschritt mit elektrischer Entladung, sowie abgeschlossen durch einen abschließenden Temperschritt mit elektrischer Erdung, zu erzielen.

Bevorzugtes Ausführungsbeispiel:

In einem bevorzugten Ausführungsbeispiel wurde ein Polyetherimid-Granulat (Ultem®1000) in einer mit Flüssigstickstoff gefüllten Pulverisette zu Polyetherimid-Pulver unterschiedlicher Partikelgrößenverteilung vermahlen und im Vakuum getrocknet. Das Pulver wurde mittels eines Stabinjektors angesaugt und zur Pulverwolke fluidisiert, um über die Pulverlanze ausgestoßen zu werden. Die Pulverbeschichtung wurde mit einem Gesamtvolumenstrom von 2,5 m³/h bei einem Pulverausstoß von 100 g/min durchgeführt. Dabei wurde eine Aufladung des Pulvers über ein Korona System mit 30 kV (GEMA-System) vorgenommen. Die Pulverabscheidung fand auf ein geerdetes Kupferblech statt, wobei der Abstand zwischen Pulverlanze und Kupferplatte 125 mm betrug. Die Abmessung der Kupferplatte (Typ Wieland K1, Cu - OF R2401) betrug 100 x 100 x 1 mm. Die Kupferplatten dienen dabei als einfache Ersatzmodelle für die zu beschichtenden Bauteile, die geometrisch komplexer sind. Die Beschichtung des Kupfers wurde im kalten Zustand (bei Raumtemperatur) durchgeführt. Eine Partikelgrößenverteilung mit einem mittleren Partikeldurchmesser [D(v; 0,5)] von 27 $\mu$m, wobei für die kleinsten Partikel der Partikeldurchmesser [D(v; 0,1)] 7 $\mu$m und für die größten Partikel der Durchmesser [D(v; 0,9)] 62 $\mu$m betrug, erzielte die besten Ergebnisse. Nach dem Pulverbeschichtungsschritt schloss sich ein 15 minütiger Temperschritt bei 310 °C an. Durch diesen Prozess wurde zunächst eine Polyetherimid-Schichtdicke von 50 $\mu$m erzielt. Anschließend wurden der Pulverbeschichtungsschritt und die Temperung wiederholt, um weiteres Polyetherimid in einer Schichtstärke von 50 $\mu$m abzuscheiden, wodurch eine Polyetherimid-Gesamtschichtdicke von 100±5 $\mu$m entstand. Das Ergebnis war eine sehr homogene und gute haftende Polyetherimidschicht mit einer sehr glatten Oberfläche.

Im Gegensatz dazu zeigte bei sonst gleichem Verfahren die Verwendung von Polyetherimidpulver mit einer Partikelgrößenverteilung bei einem mittleren Partikeldurchmesser [D(v; 0,5)] von 121 $\mu$m, einem kleinsten Partikeldurchmesser [D(v; 0,1)] von 12 $\mu$m und einem größten Partikeldurchmesser [D(v; 0,9)] von 204 $\mu$m zwar kaum Rücksprüheffekte dafür jedoch nach dem Temperschritt eine deutlich erkennbare ungleichmäßige Verteilung der Partikel in der Schicht auf. Es zeigte sich das typische Muster einer "Orangenhaut" der Polyetherimid-Beschichtung.

Ein Polyetherimidpulver mit einer Partikelgrößenverteilung bei einem mittleren Partikeldurchmesser [D(v; 0,5)] von 10 $\mu$m, einem kleinsten Partikeldurchmesser [D(v; 0,1)] von 6 $\mu$m und einem größten Partikeldurchmesser [D(v; 0,9)] von 15 $\mu$m zeigte bereits bei einer Schichtdicke von 50 $\mu$m stark zunehmende Rücksprüheffekte und das damit einhergehende gehemmte Schichtwachstum, sodass nicht einmal eine vollständige Bedeckung des metallischen Substrates mit Polyetherimid erzielt werden konnte.

Figur 5 stellt die Partikelgrößenverteilung der in dem bevorzugten Ausführungsbeispiel eingesetzten Partikel in logarithmischer Auftragung dar. Die auf der Abszisse aufgetragenen Partikeldurchmesser sind in einem Bereich von 15, insbesondere 20, bis 40 $\mu$m am stärksten populiert. Aufgrund der Verteilung ergibt sich für den mittleren Partikeldurchmesser [D(v; 0,5)] ein Wert von 27 $\mu$m .

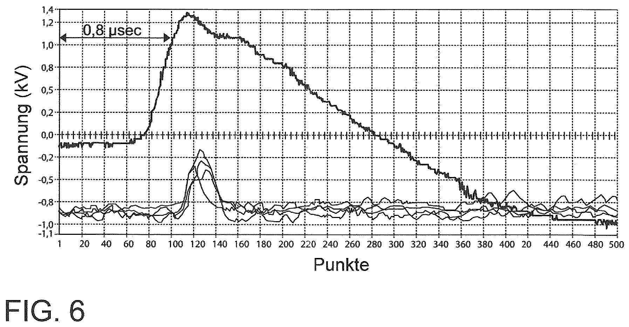

Die erfindungsgemäß hergestellten Polyetherimid-Beschichtungen zeigten weiterhin sehr gute elektrische Stoß-Teilentladungsfestigkeiten (Figur 6). Für die Charakterisierung von Isolationswerkstoffen eignen sich insbesondere Spannungsstoß-Teilentladungsmessungen, da diese die Beanspruchung des Isolationsmaterials, wie sie in der E-Maschine vorkommen (schnell ansteigende Spannungsflanken durch Frequenzumrichter), besonders gut abbilden. Hierzu wird die Probe (Beschichtete Kupferplatte) mit einem zeitlich schnell ansteigenden Spannungsimpuls beaufschlagt (Figur 6, schwarzer, fettgedruckter Graph), parallel hierzu werden die dabei auftretenden Teilentladungen in der Isolationsschicht detektiert (Figur 6, Graph mit schmalen Linien). Die Messung wird vorzugsweise insgesamt fünfmal durchgeführt, woraus anschließend der arithmetische Mittelwert gebildet wird. Je später die Teilentladungen im Isolationsmaterial auftreten, das heißt je höher die Einsetzspannungen für das Auftreten der Teilentladungen sind, je besser ist die elektrische Isolationswirkung. Konkret wies die im bevorzugten Ausführungsbeispiel beschriebene Kupferplatte mit Polyetherimid-Beschichtung (Beschichtungsdicke: 96 μm) eine Einsetzspannung von 1309 V auf. Figur 6 zeigt den Spannungsverlauf der beschriebenen Messung an einer erfindungsgemäß aufgetragenen Schicht mit einer Schichtdicke von 96 μm.

Tabelle 1 zeigt für verschiedene Pulverbeschichtungen gemessene Einsetzspannungen. Eine 275 μm dicke Probe eines kommerziell erhältlichen EP-Harzes, welches für Elektroisolationszwecke ausgewiesen ist, dient als Referenzprobe des Stands der Technik. Die Referenzprobe erreichte lediglich eine Einsetzspannung von 1510 V (Tabelle 1). Für die erfindungsgemäßen Polyetherimid-Beschichtungen konnten hingegen im Schichtdicken-Bereich von 96 - 210 μm Einsetzspannungen im Bereich von 1309-2742 V gefunden werden. Der Zusammenhang kann mathematisch wie folgt formuliert werden:

Stoß-TE-Einsetzspannung [Volt] = 12,716 [Schichtdicke in μm] + 28,577 ($R^2$= 0,9915)

Tabelle 1

| Material Pulverbeschichtung (Schichtdicke in μm) | Stoß-TE-Einsetzspannung in V |
|---|---|
| EP-Harz zur Pulverbesch. (275) (Vergleichsprobe) | 1510 |
| Polyetherimid (96), Beispielmessung in Fig. 6 | 1309 |
| Polyetherimid (123) | 1531 |
| Polyetherimid (175) | 2213 |
| Polyetherimid (210) | 2742 |

**Bezugszeichenliste**

1    Sprühpistole
2    Bearbeitungsbereich
3    Wärmestrahlung

10    isolierende Schicht
11    metallische Oberfläche
11a   Spalt
12    pulverförmiges Hochtemperaturpolymer
13    aufgetragenes Hochtemperaturpolymer
14    erste Schicht

30    Schaltring
32    Schaltringelement
34    Kontaktstelle
36    Anschlussteil
38    Sternpunktring

40    Statorblechpaket
41    Endscheiben
42    isolierende Beschichtung
43    Zahn
43a   Joch
44    Metalldraht
45    Bauteil
46    erster Abschnitt/ Schweißnaht

47 zweiter Abschnitt/ Wärmeeinflusszone

48 Schutzschicht/ Drahtlack

I Anordnen einer ersten Schicht

II Wiederholungsschritt

Ia/IIa erster Schritt

Ib/IIb Folgeschritt

## Patentansprüche

1. Verfahren zum Auftragen einer elektrisch isolierenden Schicht (10, 42) auf eine metallische Oberfläche (11, 40), wobei in einem ersten Schritt (Ia/IIa) ein pulverförmiges Hochtemperaturpolymer (12) mit einem mittleren Partikeldurchmesser [D(v; 0,5)] im Bereich von 20 bis 100 μm auf die metallische Oberfläche (11, 40) aufgetragen wird und in einem zweiten Schritt (Ib/IIb) auf das aufgetragene Hochtemperaturpolymer (12) Wärme einwirkt, wobei die metallische Oberfläche geerdet ist, sodass elektrische Ladungen abfließen,
**dadurch gekennzeichnet, dass**
das pulverförmige Hochtemperaturpolymer (12) ein Polyetherimid ist und die kleinsten Partikel des pulverförmigen Hochtemperaturpolymers (12) einen Durchmesser [(D(v; 0,1)] im Bereich von 5 bis 10 μm und die größten Partikel des pulverförmigen Hochtemperaturpolymers (12) einen Durchmesser [(D(v; 0,9)] im Bereich von 50 bis 80 μm aufweisen.

2. Verfahren nach einem der vorhergehenden Ansprüche, **dadurch gekennzeichnet, dass** das pulverförmige Hochtemperaturpolymer (12) einen mittleren Partikeldurchmesser [D(v; 0,5)] im Bereich von 20 bis 50 μm aufweist.

3. Verfahren nach einem der vorhergehenden Ansprüche, **dadurch gekennzeichnet, dass** die Wärme in den zweiten Schritt (Ib/IIb) im Bereich von 200 bis 400 °C, insbesondere im Bereich von 250 bis 350 °C auf das aufgetragene Hochtemperaturpolymer (12) einwirkt.

4. Verfahren nach einem der vorhergehenden Ansprüche, **dadurch gekennzeichnet, dass** die Wärme in einem Temperofen, durch induktive Heizung und/oder als Abwärme vorgeschalteter und/oder nachgeschalteter Prozesse erzeugt wird.

5. Verfahren nach einem der vorhergehenden Ansprüche, **dadurch gekennzeichnet, dass** die isolierende Schicht (10, 42) eine Schichtdicke im Bereich von 10 bis 300 μm, insbesondere im Bereich von 80 bis 200 μm, aufweist.

6. Verfahren nach einem der vorhergehenden Ansprüche, **dadurch gekennzeichnet, dass** der erste Schritt (Ia/IIa) und/oder der zweite Schritt (Ib/IIb) wiederholt werden.

7. Verfahren nach Anspruch 5, **dadurch gekennzeichnet, dass** das im ersten Schritt (Ia/IIa) aufgetragene Hochtemperaturpolymer (12) eine Schichtdicke im Bereich von 5 bis 70 μm, vorzugsweise im Bereich von 30 bis 70 μm, insbesondere im Bereich von 45 bis 55 μm, aufweist.

8. Verfahren nach einem der vorhergehenden Ansprüche, **dadurch gekennzeichnet, dass** die metallische Oberfläche die Wärmeeinflusszone einer Schweißverbindung umfasst und das Verfahren, insbesondere unmittelbar, nach dem Schweißen durchgeführt wird.

9. Bauteil (45) aufweisend einen Schichtstapel (100), umfassend zwei metallische Oberflächen (11, 40), die einander zugewandt angeordnet sind, wobei auf den metallischen Oberflächen (11, 40, 44) eine elektrisch isolierende Schicht (10, 42) angeordnet ist, welche mit dem Verfahren gemäß einem der vorhergehenden Ansprüche aufgebracht ist.

10. Bauteil (45) nach Anspruch 9, **dadurch gekennzeichnet, dass** das Bauteil (45) ein Teil einer elektrischen Maschine, insbesondere ein Schaltring (30), ein Teil eines Statorblechpakets (40), insbesondere eine Nut, oder eine Schweißverbindung ist.

11. Bauteil (45) nach Anspruch 9 oder 10, **dadurch gekennzeichnet, dass** die metallische Oberfläche (11, 40, 44) zwei aneinander grenzende Abschnitte (46, 47) aufweist, wobei ein erster Abschnitt (46) mit der nach einem Verfahren der Ansprüche 1 bis 8 aufgebrachten elektrisch isolierenden Schicht (10, 42) beschichtet ist und ein zweiter Abschnitt (47) eine Polyetherimid umfassende Schicht (48) aufweist.

**Claims**

1. Method for applying an electrically insulating layer (10, 42) to a metal surface (11, 40), a powdered high-temperature polymer (12) which has an average particle diameter [D(v; 0.5)] in the range of 20 to 100 $\mu$m being applied to the metal surface (11, 40) in a first step (Ia/IIa), and heat acting on the applied high-temperature polymer (12) in a second step (Ib/IIb), the metal surface being grounded such that electrical charges flow away,
**characterized in that**
the powdered high-temperature polymer (12) is a polyetherimide, and the smallest particles of the powdered high-temperature polymer (12) have a diameter [(D(v; 0.1)] in the range of 5 to 10 $\mu$m, and the largest particles of the powdered high-temperature polymer (12) have a diameter [(D(v; 0,9)] in the range of 50 to 80 $\mu$m.

2. Method according to any of the preceding claims, **characterized in that** the powdered high-temperature polymer (12) has an average particle diameter [D(v; 0.5)] in the range of 20 to 50 $\mu$m.

3. Method according to either of the preceding claims, **characterized in that** the heat in the second step (Ib/IIb) acts on the applied high-temperature polymer (12) in the range of 200 to 400°C, in particular in the range of 250 to 350°C.

4. Method according to any of the preceding claims, **characterized in that** the heat is generated in a tempering furnace, by inductive heating and/or as waste heat of upstream and/or downstream processes.

5. Method according to any of the preceding claims, **characterized in that** the insulating layer (10, 42) has a layer thickness in the range of 10 to 300 $\mu$m, in particular in the range of 80 to 200 $\mu$m.

6. Method according to any of the preceding claims, **characterized in that** the first step (Ia/IIa) and/or the second step (Ib/IIb) are repeated.

7. Method according to claim 5, **characterized in that** the high-temperature polymer (12) applied in the first step (Ia/IIa) has a layer thickness in the range of 5 to 70 $\mu$m, preferably in the range of 30 to 70 $\mu$m, in particular in the range of 45 to 55 $\mu$m.

8. Method according to any of the preceding claims, **characterized in that** the metal surface comprises the heat-affected zone of a welded joint, and the method is carried out, in particular immediately, after welding.

9. Component (45) having a layer stack (100) comprising two metal surfaces (11, 40) which are arranged facing one another, wherein an electrically insulating layer (10, 42) is arranged on the metal surfaces (11, 40, 44), which layer is applied using the method according to any of the preceding claims.

10. Component (45) according to claim 9, **characterized in that** the component (45) is a part of an electrical machine, in particular a switch ring (30), a part of a stator laminated core (40), in particular a groove, or a welded joint.

11. Component (45) according to claim 9 or 10, **characterized in that** the metal surface (11, 40, 44) has two contiguous portions (46, 47), a first portion (46) being coated with the electrically insulating layer (10, 42) applied according to a method of claims 1 to 8, and a second portion (47) having a layer (48) comprising polyetherimide.

**Revendications**

1. Procédé d'application d'une couche électriquement isolante (10, 42) sur une surface métallique (11, 40), dans lequel, dans une première étape (Ia/IIa), un polymère haute température (12) pulvérulent comportant un diamètre moyen de particule [D(v ; 0,5)] dans la plage de 20 à 100 $\mu$m est appliqué sur la surface métallique (11, 40) et, dans une seconde étape (Ib/IIb), de la chaleur agit sur le polymère haute température (12) appliqué, dans lequel la surface métallique est mise à la terre de sorte que les charges électriques s'évacuent,
**caractérisé en ce que**
le polymère haute température (12) pulvérulent est un polyéthylène et les plus petites particules du polymère haute température (12) pulvérulent ont un diamètre [(D(v ; 0,1)] dans la plage de 5 à 10 $\mu$m et les plus grandes particules du polymère haute température (12) pulvérulent ont un diamètre [(D(v ; 0,9)] dans la plage de 50 à 80 $\mu$m.

2.  Procédé selon l'une des revendications précédentes, **caractérisé en ce que** le polymère haute température (12) pulvérulent présente un diamètre moyen de particule [D(v ; 0,5)] dans la plage de 20 à 50 $\mu$m.

3.  Procédé selon l'une des revendications précédentes, **caractérisé en ce que,** dans la seconde étape (Ib/IIb), la chaleur agit sur le polymère haute température (12) appliqué dans la plage de 200 à 400 °C, en particulier dans la plage de 250 à 350 °C.

4.  Procédé selon l'une des revendications précédentes, **caractérisé en ce que** la chaleur est produite dans un four à recuire, par chauffage inductif et/ou comme chaleur perdue de processus placés en amont et/ou en aval.

5.  Procédé selon l'une des revendications précédentes, **caractérisé en ce que** la couche isolante (10, 42) présente une épaisseur de couche dans la plage de 10 à 300 $\mu$m, en particulier dans la plage de 80 à 200 $\mu$m.

6.  Procédé selon l'une des revendications précédentes, **caractérisé en ce que** la première étape (Ia/IIa) et/ou la seconde étape (Ib/IIb) sont répétées.

7.  Procédé selon la revendication 5, **caractérisé en ce que** le polymère haute température (12) appliqué dans la première étape (Ia/IIa) présente une épaisseur de couche dans la plage de 5 à 70 $\mu$m, de préférence dans la plage de 30 à 70 $\mu$m, en particulier dans la plage de 45 à 55 $\mu$m.

8.  Procédé selon l'une des revendications précédentes, **caractérisé en ce que** la surface métallique comprend la zone affectée thermiquement d'un assemblage soudé et **en ce que** le procédé est mis en œuvre, en particulier immédiatement, après le soudage.

9.  Composant (45) présentant un empilement de couches (100), comprenant deux surfaces métalliques (11, 40) qui sont agencées l'une en face de l'autre, dans lequel une couche électriquement isolante (10, 42) est agencée sur les surfaces métalliques (11, 40, 44), laquelle est appliquée par le procédé selon l'une des revendications précédentes.

10. Composant (45) selon la revendication 9, **caractérisé en ce que** le composant (45) est une partie d'une machine électrique, en particulier une bague de commutation (30), une partie d'un paquet de tôles de stator (40), en particulier une rainure, ou un assemblage soudé.

11. Composant (45) selon la revendication 9 ou 10, **caractérisé en ce que** la surface métallique (11, 40, 44) présente deux sections (46, 47) adjacentes, dans lequel une première section (46) est revêtue de la couche électriquement isolante (10, 42) déposée selon un procédé des revendications 1 à 8, et une seconde section (47) présente une couche (48) comprenant du polyéthylène.

FIG. 1

FIG. 2

EP 3 254 291 B1

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1505711 A2
- DE 102004036368 A1
- DE 102008007409 A1
- DE 102011115405 A1
- DE 3010982 A1
- DE 102006061940 A1
- DE 102005009552 A1
- WO 002006092126 A1
- WO 0148763 A2
- DE 102009047865 A1
- US 4199651 A
- EP 3081608 A1